# EUROPEAN PATENT APPLICATION

(11) **EP 0 849 685 A2**
(43) Date of publication of application: **24.06.1998**
(21) Application number: 97310341.9
(22) Date of filing: 19.12.1997
(51) Int. Cl.: G06F 13/42

(54) **Communication bus system between processors and memory modules**

(30) Priority: 19.12.1996 US 33509 P
(71) Applicant: Texas Instruments Incorporated, Dallas, Texas 75265 (US)
(72) Inventor: Vogley, Wilbur C., Missouri City, TX 77459 (US)
(74) Representative: Holt, Michael

(57) **Abstract**

An apparatus (10) is provided for address and data distribution to memory modules (20) . The apparatus (10) includes a controller (12) for controlling memory modules that comprises an optical transmitter (14) and a receiver (24). An optical cable (16) having a plurality of optical fibers (18) is connected to the optical transmitter (14) of the controller (12). A plurality of memory modules (20) are each connected to one of the optical fibers (18) and have a driver for transmitting data. A communication bus (22) is connected to the drivers of the memory modules (20) and to the receiver (24) of the controller (12). The controller (12) is operable to broadcast address and data information to the memory modules (20) via the optical fibers (18), and the memory modules (20) are operable to transmit data to the controller (12) via the drivers and the communication bus (22).

## Description

### TECHNICAL FIELD OF THE INVENTION

This invention relates in general to the field of electronic devices, and more particularly to an apparatus and method for address and data distribution to memory modules.

### BACKGROUND OF THE INVENTION

Communication between processors and main memory modules requires communication across a given physical bus length. Due to the physical bus length, there is an upfront latency produced by propagation time of signals across the bus. For example, a typical upfront latency may be 10 nanoseconds. As processing speeds increase to the 500 MHz range and above, a typical 10 nanosecond latency begins to cause problems. One conventional point-to-point communication protocol for increasing the speed of communication with memory modules is RAMLINK, which is defined by IEEE Standard 1596.4. However, it is desirable to reduce the upfront latency of communicating with memory modules without requiring the use of such a protocol.

### SUMMARY OF THE INVENTION

Accordingly the present invention provides an apparatus and method for address and data distribution to memory modules that substantially reduce or eliminate problems and disadvantages of prior computer systems.

According to a preferred embodiment thereof, an apparatus is provided for address and data distribution to memory modules. The apparatus includes a controller for controlling memory modules that comprises an optical transmitter and a receiver. An optical cable having a plurality of optical fibers is connected to the optical transmitter of the controller. A plurality of memory modules are each connected to one of the optical fibers and have a driver for transmitting data. A communication bus is connected to the drivers of the memory modules and to the receiver of the controller. The controller is operable to broadcast address and data information to the memory modules via the optical fibers, and the memory modules are operable to transmit data to the controller via the drivers and the communication bus.

An advantage is that the use of an optical drive and optical fiber for communicating with memory modules and the use of low power drivers for return data in order both to reduce upfront latency and to provide a low power solution.

### BRIEF DESCRIPTION OF THE DRAWINGS

The present invention will now be further described by way of example, with reference to the accompanying drawings in which:
FIGURE 1 is a block diagram of a first embodiment of an apparatus for address and data distribution according to the teachings of the present invention; and
FIGURE 2 is a block diagram of a second embodiment of an apparatus for address and data distribution according to the teachings of the present invention.

### DETAILED DESCRIPTION OF THE INVENTION

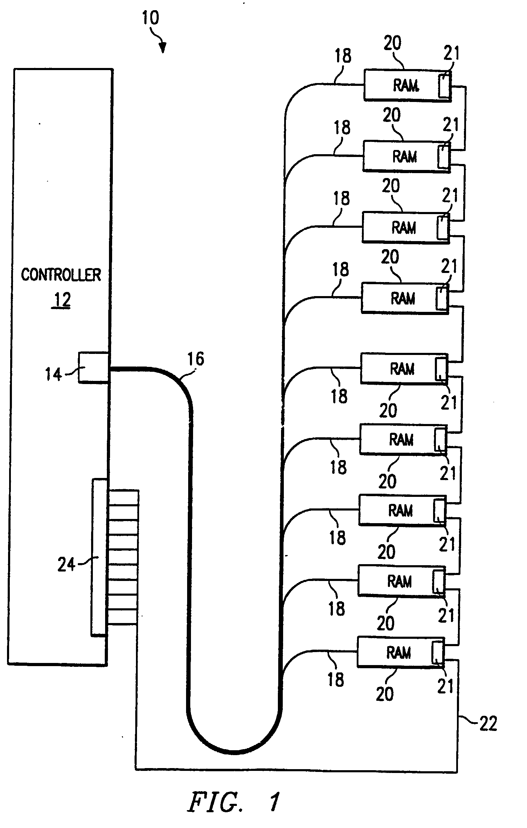

FIGURE 1 is a block diagram of an embodiment of an apparatus, indicated generally at 10, for address and data distribution. Apparatus 10 includes a controller 12 that has an optical transmitter 14. An optical cable 16 is connected to optical transmitter 14 and includes a plurality of individual optical fibers 18. Individual optical fibers 18 are connected to associated memory modules 20. Memory modules 20 can be DRAM, SRAM or other types of memory modules used in electronic systems. Memory modules 20 are connected to controller 12 via a communication bus 22 to return data driven by low power drivers 21. Controller 12 includes a receiver 24 which receives communication bus 22 from memory modules 20.

In operation, controller 12 communicates with a processor or other components within a computer system in order to manage operation of the memory space provided by memory modules 20. In order to accomplish this function, controller 12 uses optical transmitter 14 to drive signals on cable 16 and fibers 18 to communicate address and data information to memory modules 20. Communication bus 22 is driven by the low power drivers 21 on memory modules 20 to provide data back to controller 12 via receiver 24. In this manner, apparatus 10 provides high speed communication of address and data information from controller 12 to memory modules 20 in order to reduce upfront latency of communication with memory modules. If a read operation is performed, data is provided back to controller 12 using low power drivers 21 such that the apparatus 10 provides both reduced upfront latency and low power operation.

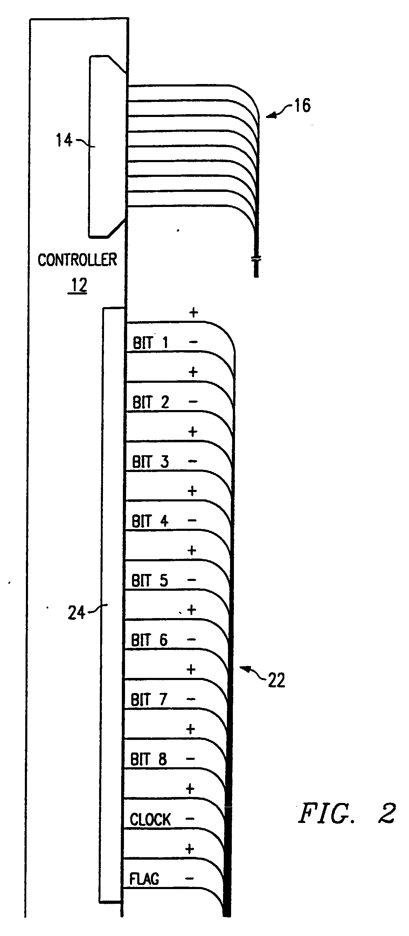

Conventional synchronous DRAMs (SDRAMs), for example, are capable of 100 MHz operation. It is contemplated that SDRAMs and other memory modules will be operated at 200 MHz and higher. Some conventional computer systems operate at 200 MHz and will soon operate at 300 MHz and higher. The bandwidth is improved substantially by synchronous DRAMs. However, the physical latency becomes relatively larger as the number of memory modules and speed increases. The conventional RAMLINK proposal is an interface protocol that does not address physical latency. Thus, the present invention provides advantages over conventional systems by broadcasting the address and data to the memory modules across high speed optical fiber. The RAMLINK protocol can still be used, if desired, for the return of data to controller 12. Apparatus 10 reduces the additional input pin count of the memory modules to an optical receiver and a loaded output which can be a differential link from memory module to memory module as shown in FIGURE 2. Since the majority of the increase in physical latency is getting the address to the correct memory module, the apparatus 10 substantially reduces this address latency increase. As a trade-off, the output physical latency could also be reduced by also making it an optical drive and having a gather operation rather than a broadcast where all fibers would be terminated at one location. However, this would require more power than low power operation using low power drivers on the memory modules.

FIGURE 2 is a block diagram of an alternative apparatus, indicated generally at 20, for address and data distribution. As shown, controller 12 includes a transmit laser 14 which is connected to optical cable 16. Transmit laser 14 operates to transmit address and data optically to the various memory modules via optical cable 16. Data is returned from the memory modules differentially on differential lines 22 to a differential receiver 24. In this manner, the data returned from the memory modules can use a point-to-point communication protocol such as the RAMLINK protocol.

Although the certain embodiments have been described in detail, it should be understood that various changes, substitutions and alterations can be made thereto without departing from the spirit and scope of the teachings disclosed herein.

## Claims

1. An apparatus for address and data distribution to memory modules, comprising:
a controller for controlling memory modules comprising an optical transmitter and a receiver;
an optical cable having a plurality of optical fibers, the optical cable connected to the optical transmitter;
a plurality of memory modules, each connected to one of the optical fibers and having a driver for transmitting data; and
a communication bus connected to the drivers of the memory modules and to the receiver of the controller; wherein the controller is operable to broadcast address and data information to the memory modules via the optical fibers; and the memory modules are operable to transmit data to the controller via the drivers and the communication bus.

2. The apparatus of Claim 1, wherein the driver of each memory module is a low power driver.

3. The apparatus of Claim 1 or Claim 2, wherein the driver of each memory module is an optical transmitter and the communication bus is formed from optical fibers.

4. The apparatus of any of Claims 1 to 3, wherein the communication bus comprises differential lines and the memory modules transmit data using a RAMLINK protocol.

5. A method for address and data distribution to memory modules, comprising:
connecting a controller for controlling memory modules and a plurality of memory modules with an optical cable having a plurality of optical fibers, such that the optical cable is connected to the optical transmitter of the controller;
transmitting address and data information from the controller to the memory modules via the optical fibers; and
transmitting data from the plurality of memory modules to the controller via a communication bus.

6. The method of Claim 5, wherein the step of transmitting data is accomplished using a low power driver.

7. The method of Claim 5 or Claim 6, wherein the step of transmitting data is accomplished using optical transmitters and the communication bus is formed from optical fibers.

8. The method of any of Claims 5 to 7, wherein the step of transmitting data is accomplished via a communication bus comprising differential lines and using a RAMLINK protocol.
